(19)

**Europäisches Patentamt**
**European Patent Office**
**Office européen des brevets**

(11) **EP 4 687 080 A1**

(12) **EUROPEAN PATENT APPLICATION**

(43) Date of publication:
**04.02.2026 Bulletin 2026/06**

(21) Application number: **24192089.1**

(22) Date of filing: **31.07.2024**

(51) International Patent Classification (IPC):
**G06N 10/20** (2022.01)    **G06N 10/40** (2022.01)

(52) Cooperative Patent Classification (CPC):
**G06N 10/20; G06N 10/40;** G06N 10/70

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **QC Design GmbH**
**89081 Ulm (DE)**

(72) Inventors:
• **SANTANDREA, Matteo**
**89081 Ulm (DE)**
• **WEBER, Raphael**
**89081 Ulm (DE)**
• **DHAND, Ish**
**89081 Ulm (DE)**
• **KUMAR, Shreya Prasanna**
**89081 Ulm (DE)**

(74) Representative: **Huebner, Stefan Rolf**
**Postfach 101317**
**80087 München (DE)**

(54) **METHOD OF GENERATING A QUANTUM-MECHANICAL CLUSTER STATE**

(57)    A method of generating, by using a photonic quantum emitter, a quantum-mechanical GHZ state, the method comprising the steps of:
- Generating a GHZ state comprising the photonic quantum emitter and at least three photons; and
- Decoupling the photonic quantum emitter from the remaining cluster state, the decoupling of the photonic quantum emitter from the remaining cluster state comprises the steps of:
c1. Applying a quantum gate operation between the photonic quantum emitter and a new empty photonic mode to generate a new photon; and
c2. Measuring the newly generated photon in the computational basis.

Moreover, a method of generating, by using a photonic quantum emitter, a quantum-mechanical cluster state that comprises a linear arrangement of $m$ photonic sections, wherein $m > 1$, wherein each section has $ni > 0$ photons ($i$ = 1, 2, ... , $m$) and at least one section comprises more than one photon, the method comprising the steps of:
- Generating a cluster state comprising the photonic quantum emitter and a linear arrangement of $m$ photonic sections; and
- Decoupling the photonic quantum emitter from the remaining cluster state.
Further, a method of generating, using a photonic quantum emitter, a quantum-mechanical cluster state that comprises a linear arrangement of $m$ photonic sections, wherein $m > 1$, wherein each section has $ni > 0$ photons ($i$ = 1, 2, ... , $m$) and at least one section comprises more than one photon, the method comprising the steps of:
a. If the photonic quantum emitter is not already in a state of superposition of eigenstates that can entangle with emit a photon in a superposition of two photonic modes, initialising the photonic quantum emitter such a state of superposition; and
b. Generating $m$ sections by performing for each section $i$ = 1, 2, ... , $m$ sequentially, starting with $i$ = 1, at least the steps of:
b1. Generating a section $i$ comprising $ni$ mutually entangled photons by means of generating a sequence of $ni$ photons whose state is entangled with the state of the photonic quantum emitter; and
b2. Returning the photonic quantum emitter to a state of superposition of the eigenstates.

c. Decoupling the photonic quantum emitter from the remaining cluster state.

Fig 1

## Description

## Field of the invention

The invention relates to methods of generating, by using a photonic quantum emitter, a quantum-mechanical cluster state. It moreover relates to quantum-mechanical cluster states and a set of quantum-mechanical cluster states. It further relates to methods of using quantum-mechanical cluster states, a method of fusion-based quantum computing, and an apparatus for implementation the afore-mentioned methods.

## Background of the invention

Lindner et al in "Proposal for pulsed on-demand sources of photonic cluster state strings," Phys Rev Lett, 2009, 103, 113602 disclose a method of generating a cluster state that includes photons in a controlled manner using a quantum dot. The method involves repeatedly exciting a superposition of unexcited electronic states of the quantum dot with linearly polarised photons to induce, with each excitation, the emission of a photon that forms Bell pairs with the quantum dot. Lindner et al disclose alternative protocols that result in either a linear photonic cluster state or a GHZ state comprising the generated photons and the quantum dot. Lindner et al also disclose steps to disentangle the cluster state's quantum dot from its photonic components by measuring the electronic spin state of the quantum dot, provided that the cluster state is a linear cluster state.

Schwartz et al in "Deterministic generation of a cluster state of entangled photons," Science, 2016, 354, 434 disclose an implementation of the protocol of Lindner et al, in which a quantum dot is first excited from its ground state to a superposition of dark exciton eigenstates which serve as the unexcited electronic states of the method of Lindner et al. A linearly polarised photon is then used to excite a dark exciton eigenstate to its corresponding biexciton eigenstate. Upon spontaneous return to the dark exciton eigenstate, a photon is emitted that is entangled with the quantum dot.

Löbl et al in "Loss-tolerant architecture for quantum computing with quantum emitters", arXiv:2304.03796v2, 2023 refer to GHZ states of photons that have a quantum dot at their centre as a resource states. They disclose a method of combining multiple such resource states to generate larger spin cluster states. Combining is achieved via rotated type-II fusions that involve Bell measurements on the photons of the resource states.

Li et al in "Photonic resource state generation from a minimal number of quantum emitters," npj Quantum Inf, 2022, 8, 11 disclose an algorithm that, given a desired multi-photon graph state, determines the minimum number of quantum emitters and precise operation sequences that can produce it. It is based on the idea that an optimized a protocol for generating a desired photonic graph state can be obtained by reversing an optimized protocol for disentangling this graph state.

## Object of the invention

It is a problem to be solved by the present invention to provide improved methods of generating a quantum-mechanical cluster state. It is moreover a problem to be solved by the present invention to provide new quantum-mechanical cluster states and a new set of quantum-mechanical cluster states. It is a further problem to be solved by the present invention to provide new methods of using quantum-mechanical cluster states, a new method of fusion-based quantum computing, and an new apparatus for implementation the afore-mentioned methods.

## Solution according to the invention

In the following, any reference to one (including the articles "a" and "the"), two or another number of objects is, provided nothing else is expressly mentioned, meant to be understood as not excluding the presence of further such objects in the invention. The reference numerals in the patent claims are not meant to be limiting but merely serve to improve readability of the claims.

According to a first aspect of the invention, the problem is solved by a method with the features of claim 1. A quantum-mechanical GHZ cluster state is generated by using a photonic quantum emitter. The method comprises the steps of: Generating a cluster state comprising the photonic quantum emitter and at least three photons; and decoupling the photonic quantum emitter from the remaining cluster state. The decoupling of the photonic quantum emitter from the remaining cluster state comprises the steps of: c1. Applying a quantum gate operation between the photonic quantum emitter and a new empty photonic mode to generate a new photon; and c2. Measuring the newly generated photon in the computational basis.

In the context of the present invention, the term **quantum emitter** refers to a system or entity that emits individual quantum particles of light, also referred to as **photons.** An example of a quantum emitter is a quantum dot.

The term "cluster state" as used herein refers is a quantum-mechanical state of two or more entangled qubits, whose entanglement structure can be described by means of an abstract mathematical unweighted graph, as defined in Hein et al. "Entanglement in Graph States and its Applications", arXiv:quant-ph/0602096, 2006, page 14. In the context of the present invention, a **qubit** (also referred to as a "quantum bit") is a physical quantum system with an associated quantum state that may be used to encode quantum information. Qubits can be implemented in a variety of quantum systems. Examples of quantum systems include: polarization states of photons; spin states of electrons or holes in quantum dots, atoms, molecules, crystal lattice defects such as vacancy centres (e.g., nitrogen vacancies in diamond), and nuclear spin states of atomic nuclei; and energy states of quantum dots, molecules, atoms, ions, nuclei, or photons. The preferred qubit is two-dimensional, ie, it can assume a superposition of two states, typically referred to as 10> and |1>, called the computational basis, ie, the natural basis where all quantum operations are performed. The computational basis is encoded differently for each system, eg 10> and |1> can correspond to the states |↓> and |↑> in the case of "down" and as "up" spin states, to the states |R> and |L> in specifically the "left" and "right" circular polarisation states of light, or to the states |H> and |V> in specifically the "horizontal" and "vertical" polarisation states of light.

As used herein, the term **GHZ state** refers to a generalised Greenberger-Horne-Zeilinger state. It comprises of two or more constituent qubits, which are maximally entangled. A GHZ state of M qubits can be written as a balanced superposition as follows:

$$\frac{|0>^{\otimes M} + |1>^{\otimes M}}{\sqrt{2}}$$

This aspect of the invention is, ia, based on the inventor's finding that a quantum emitter can be decoupled from a GHZ state comprised of photons and the quantum emitter by the two simple steps c1 and c2. The term **decoupling** in the context of the present invention refers to the disentangling of the photonic quantum emitter from the remaining cluster state. The remaining cluster state preferably is a purely photonic state, ie, it comprises of photons only.

According to a second aspect of the invention, the problem is solved by a method with the features of claim 2. By using a photonic quantum emitter, a quantum-mechanical cluster state is generated that comprises a linear arrangement of $m$ photonic sections, wherein $m > 1$. Each section has $n_i > 0$ photons ($i = 1, 2, ... , m$) and at least one section comprises more than one photon. The method comprises the steps of: Generating a cluster state comprising the photonic quantum emitter and a linear arrangement of $m$ photonic sections; and decoupling the photonic quantum emitter from the remaining cluster state.

This aspect of the invention is, ia, based on the inventors' finding that it is achievable that such linear arrangement of photonic sections is be used to great benefit in quantum computing applications, in particular in fusion-based quantum computing.

According to a third aspect of the invention, the problem is solved by a method with the features of claim 4. Using a photonic quantum emitter, a quantum-mechanical cluster state is generated that comprises a linear arrangement of m photonic sections, wherein $m > 1$. Each section has $n_i > 0$ photons ($i = 1, 2, ... , m$) and at least one section comprises more than one photon. The method comprising the steps of:

a. If the photonic quantum emitter is not already in a state of superposition of eigenstates that can emit a photon in a superposition of two photonic modes, initialising the photonic quantum emitter in such state of superposition; and
b. Generating $m$ sections. The generation of $m$ sections comprises performing for each section $i = 1, 2, ... , m$ sequentially, starting with $i = 1$ at least the steps of:

b1. Generating a section comprising $n_i$ mutually entangled photons by means of generating a sequence of $n_i$ photons whose state is entangled with the state of the photonic quantum emitter (preferably by means of the quantum emitter emitting the $n_i$ photons into $n_i$ empty photonic modes); and
b2. Returning the photonic quantum emitter to a state of superposition of the eigenstates.

The natural number $n_i$ indicates the number of photons of section $i$. If $n_i = 1$, the section $i$ is composed of a single photon. If $n_i > 1$, the section i is composed of more than one photon, which photons preferably are entangled to form a GHZ-encoded qubit.

As used herein, a **photonic mode** is a solution of the quantum-mechanical equation describing the propagation of light in a medium. A photonic mode is **empty** if no photons are present in it.

This aspect of the invention exploits the fact that the excitation and relaxation between different energy levels of the photonic quantum emitter, such as the transition between two different electronic spin state, can couple to certain photonic modes, such as the circular left and circular right polarized modes of light.

It is an achievable advantage of the above methods of generating a quantum-mechanical cluster state that they are deterministic as opposed to probabilistic (also referred to as nondeterministic) methods. Probabilistic methods achieve entanglement with a probability of success that is considerably less than one. Advantageously, it is achievable that the cluster state according to the above methods as well as the cluster states defined further below as aspects of the present invention serve as a fundamental resource state for photonic quantum computing, using a quantum emitter.

According to a fourth aspect of the invention, the problem is solved by a quantum-mechanical cluster state with the feature of claim 16. The cluster state is obtained any one of the aforementioned methods.

According to a fifth aspect of the invention, the problem is solved by a quantum-mechanical cluster state with the features of claim 17. The cluster state comprises a linear arrangement of m photonic sections, wherein $m > 1$, each section has $n_i > 0$ photons ($i = 1, 2, ... , m$) and at least one section comprises more than one photon, where the two or more photons form a GHZ-encoded qubit.

According to a sixth aspect of the invention, the problem is solved by a set with the features of claim 20. The set comprises two or more of the quantum-mechanical cluster states mentioned above as well as discussed further below.

According to a seventh aspect of the invention, the problem is solved by a method with the feature of claim 21. The method uses any one of the quantum-mechanical cluster states.

It is an achievable advantage of the present invention that a GHZ state can be used to represent a qubit, the qubit being protected by virtue of the entanglement of the GHZ state's photons. Moreover, it is achievable that individual sections of the linear arrangement of sections of the cluster state according to the invention each represent a qubit. In particular, if one or more of these sections are GHZ-like, ie, their photons are maximally entangled with each other, they can be referred to as a **GHZ-encoded qubits,** and the linear arrangement of sections can be referred to as a **GHZ-encoded linear cluster state.** Advantageously, each GHZ-encoded qubit of this GHZ-encoded linear cluster state is protected by virtue of the entanglement of its constituent photons.

The protection of the GHZ-encoded qubit stems from the fact that information stored in a single qubit is shared among many other entangled qubits. This protects the GHZ-encoded qubit against errors and noise, including the loss of individual constituent qubits. Moreover, in fusion-based quantum computing they can be used to improve the success rate of fusion between two GH-encoded states as compared to the fusion of single-photon states.

Therefore, in an eighth aspect of the invention, the problem is solved by a method with the features of claim 22. The GHZ state or at least one section of the cluster state that constitutes a GHZ-encoded qubit according to the aforementioned method or the aforementioned cluster state is used to represent a qubit.

According to a nineth aspect of the invention, the problem is solved by a method with the feature of claim 23. A quantum-mechanical ring cluster state is created. The method comprises the step a. of providing a quantum-mechanical cluster precursor states that comprises a linear arrangement of $m$ photonic sections, wherein $m > 5$, wherein each section has $n_i > 1$ photons ($i = 1, 2, 3, 4, 5, ...$) and wherein there is a first p section and a second section q that have the same number $n_p = n_q$ of photons and that are separated by at least four other sections between them. Moreover, the method comprises the step b. of fusing the first section p of the quantum-mechanical precursor state with its second section q.

Advantageously, in the fusing step of this aspect of the invention, the linear arrangement of sections of the precursor state between the first section p and the second section q are formed into a ring. Such ring states can be of great use in quantum computing.

As used herein, **fusing** as well as the synonyms "a fusion operation" and "fusion" refer to one or more projective entangling measurement(s), each measurement entangling at least two photons. In the context of the present invention, **fusing sections** means fusing at least one photons of each section with at least one photon of each other section.

According to a tenth aspect of the invention, the problem is solved by a method with the feature of claim 24. A quantum-mechanical cluster state is generated. The method comprises the step a. of providing a set of two or more precursor cluster states which set includes amongst its precursor cluster states at least one or more cluster states generated by any one of the afore-mentioned methods, and/or one or more of the afore-mentioned cluster states, and/or the afore-mentioned set of two or more cluster states. Moreover, the method comprises the step b. of fusing a section of each cluster state with a section of each other precursor cluster states.

Advantageously, with the method of this aspect of the invention, quantum states can be generated that are particularly useful in quantum computing. For example, in the case of two precursor cluster states with three sections, by fusing the middle sections a four-star state can be created in which each of the state's four qubits is represented by a first or a last section of one of the two precursor cluster states.

According to an eleventh aspect of the invention, the problem is solved by a method of fusion based quantum computing with the feature of claim 25. The method employs resource states which include at least one or more cluster states generated by any of the afore-mentioned methods; one or more of the afore-mentioned cluster states; or the afore-mentioned set of two or more cluster states,

As used herein, **fusion-based quantum computing** (FBQC) refers to a method of quantum computing that employs fusion operations to generate the fusion network necessary to perform quantum computation. The fusion network is a quantum cluster state that can be used to store quantum information and to perform quantum computation, and it is constructed by fusing together at least two resource states. As used herein, **resource states** are the cluster states that serve as building blocks of the fusion network. Resource states are cluster states and they can be either directly generated or synthesised by fusing together two or more precursor cluster states. Fault tolerance, ie the ability of the network to tolerate errors in the resource state and in the measurement, is ensured by choosing appropriate resource states, fusion gates and having a big enough fusion network.

According to a twelfth aspect of the invention, the problem is solved by an apparatus with the feature of claim 26. The apparatus implements any one of the aforementioned methods.

The present invention is particularly can be employed in quantum computing, including fusion-based quantum computing. "Quantum computation," as used herein, refers generally to performing a sequence of operations (a "computation") on an ensemble of qubits.

## Preferred embodiments of the invention

Preferred features of the invention which may be applied alone or in combination are discussed in the following and in the dependent claims.

In a preferred embodiment of the invention, before generating the GHZ state or a section of the linear arrangement of $m$ photonic sections, the photonic quantum emitter is initialised in a state of superposition of eigenstates that can emit a photon in a superposition of two photonic modes. In some embodiments, this comprises the application of a quantum gate operation to the photonic quantum emitter. As used herein, a **quantum gate operation** comprises the application of at least one quantum gate. Preferably, the quantum gate operation comprises, more preferably consist of applying to the photonic quantum emitter an **H gate** or an equivalent single-qubit gate that rotates the state of the quantum emitter in a balanced superposition of eigenstates that can emit a photon in a superposition of two photonic modes, for example a $\sqrt{X}$ gate. As used herein, the term "H gate", denotes a Hadamard gate.

In some embodiments of the invention, the quantum emitter is excited by an excitation pulse - preferably a pulse of light, more preferably laser light - which initializes it in a state of superposition of eigenstates that can emit a photon in a superposition of two photonic modes. Preferably, this state is a dark exciton state. Preferably, before such initialisation, the photonic quantum emitter is in a ground state.

In the quantum system of the photonic quantum emitter used in the present invention, the eigenstates of the lower and higher energy levels of the photonic quantum emitter preferably are spin eigenstates, more preferably electronic spin eigenstates of the photonic quantum emitter. In the following, the eigenstates of the lower energy level are referred to as $|\downarrow>$ ("down") and $|\uparrow>$ ("up"), while the eigenstates to the higher energy level are indicated by the symbols $|\Downarrow>$ and $|\Uparrow>$. Preferably, the transition between the states $|\downarrow>$ and $|\Downarrow>$ is mediated by light absorption and emission, more preferably by the absorption and emission of a left-circularly polarized photon, indicated by $|L>$. Similarly, the transition between the states $|\uparrow>$ and $|\Uparrow>$ is preferably mediated by light absorption and emission, more preferably by the absorption and emission of a right-circularly polarized photon, indicated by $|R>$.

Preferably, in the step of initialising the quantum emitter in a superposition of eigenstates and/or in the step of returning the photonic quantum emitter to a superposition of eigenstates (as discussed in detail further below), the photonic quantum emitter is initiated in a state of balanced superposition of eigenstates, more preferably two eigenstates, for example the state

$$\frac{|\downarrow> + |\uparrow>}{\sqrt{2}}$$

or the state

$$\frac{|\downarrow> - |\uparrow>}{\sqrt{2}}$$

or the state

$$\frac{|\downarrow> + i|\uparrow>}{\sqrt{2}}$$

or the state

$$\frac{|\downarrow> - i|\uparrow>}{\sqrt{2}}.$$

In a preferred method according to the present invention, $m$ sections are created by generating each section $i = 1, 2, ... , m$ sequentially, starting with $i = 1$.

Preferably, at least one of m photonic sections comprises two or more photons, the two or more photons forming a GHZ-encoded qubit.

Generating a GHZ state with $n$ photons or generating a section that is a GHZ-encoded qubit of $n$ photons preferably comprises sequentially emitting $n$ photons into $n$ empty photonic modes, where each photon is entangled with the state of the photonic quantum emitter. In some embodiments of the invention, such entangling is achieved by applying a gate operation. Thus, generating a GHZ state or a GHZ-encoded qubit with $n$ photons preferably involves applying a sequence of at least $n$ gate operations. The preferred quantum gate operation comprises of the application of one two-qubit gate between the quantum emitter and the empty photonic modes, and it can comprise additional single-qubit gates acting on either the quantum emitter, or the photonic modes, or both. More preferably, the generation of a GHZ state or GHZ-encoded qubit with $n$ photons involves the application of $n$ two-qubit quantum gates to the respective photonic mode and the quantum emitter. Preferably, the photonic quantum emitter serves as the control qubit and the photonic mode as the target qubit of the two-qubit quantum gate. Particularly preferably, the quantum gate is a CX gate. As used herein, the term **CX gate,** denotes a controlled X gate, a two-qubit gate also referred to as "CNOT gate".

Preferably, after the last, ie, the $n^{th}$ photon of the GHZ-like state of the section has been generated, the photonic quantum emitter is brought to a state of superposition of the lower energy level eigenstates. Preferably, this is accomplished by applying a quantum gate operation to the photonic quantum emitter. Preferably, the quantum gate operation comprises, more preferably consist of applying to the photonic quantum emitter an H gate or an equivalent single-qubit gate that rotates the state of the quantum emitter in a balanced superposition of eigenstates that can emit a photon in a superposition of two photonic modes, for example a √X gate. In some embodiments of the invention, thereafter another section (if any) can be generated. Alternatively in some embodiments of the invention, if no more section is to be added, the cluster stage can be decoupled from the photonic quantum emitter as is detailed further below.

In a preferred embodiment of the invention, generating a cluster state comprising the photonic quantum emitter and a linear arrangement of $m$ photonic sections comprises the steps of a. initialising the photonic quantum emitter in a state of superposition of eigenstates that can entangle with photonic modes; and b. generating the $m$ sections as set out above.

Preferably the photonic modes employed herein are orthogonal photon polarisation modes, more preferably circular polarisation. In the following |L> refers to the left-circular polarisation, and |R> refers to right-circular polarisation. Accordingly, the preferred emitted photons are in a superposition of polarisation states, more preferably the above-mentioned circular polarisation states.

It is preferred that the emitted photon is in a balanced superposition of photonic eigenstates, more preferably two eigenstates, for example a balanced superposition of the above-mentioned polarisation states |L> and |R>, ie, the emitted photon is horizontally

$$\frac{|L> \ + \ |R>}{\sqrt{2}},$$

or vertically polarised

$$\frac{|L> \ - \ |R>}{\sqrt{2}\ i}.$$

Preferably, at least one, more preferably all quantum gate operations between the photonic quantum emitter and the respective empty photonic modes of the $n_i$ empty photonic modes are performed by exciting the photonic quantum emitter with one or more photons, typically from a pulse of laser light. In the case where the state of the photonic quantum emitter is in a superposition of spin eigenstates |↑> and |↓> before generating a section, the method can exploit the fact that it is achievable that the state |↑> couples to an excited state |⇑> of the photonic quantum emitter by means of a right-circularly polarised photon |R>, and the state |↓> couples to an excited state |⇓> by means of a left-circularly polarised photon |L>. Consequently, exciting a superposition of spin eigenstates |↑> and |↓> with a superposition of polarisation eigenstates |R> and |L>, results in a superposition of the excited states |⇑> and |⇓> which, after spontaneous emission of a photon results in a superposition of the Bell state |↑, R> and |↓, L>. Repeating the excitation adds another photon, so that the state, after $n$ excitations the state is a superposition of |↑, $R_n R_{n-1} \ldots R_2 R_1$> and |↓, $L_n L_{n-1} \ldots L_2 L_1$>.

A preferred GHZ state or a preferred section of the cluster state that comprises a linear arrangement of $m$ photonic sections comprises at least 2, preferably at least 3, even more preferably at least 4, 5, 6 or 7 photons. This embodiment of the invention exploits the fact that more photons entail greater protection of the quantum information. In a preferred cluster state that comprises a linear arrangement of m photonic sections, at least one, preferably at least 2, more preferably at least 3, 4, 5, 6, 7 or 8, even more preferably all sections are GHZ-encoded qubits that comprise of at least 2, preferably at least 3, more preferably at least 4, 5, 6, 7 or 8 photons.

The preferred quantum-mechanical cluster state comprises a photonic quantum emitter and a linear arrangement of $m$ photonic sections, wherein $m > 1$, each section has $n_i > 0$ photons ($i = 1, 2, \ldots, m$) and at least one section comprises more than one photon.

In a preferred method, the photonic quantum emitter is decoupled from the remaining cluster state. This is preferably accomplished once the desired GHZ state, still including the photonic quantum emitter, or the desired cluster state that comprises a linear arrangement of $m$ photonic sections, likewise still including the photonic quantum emitter, is completed. Also preferably, before decoupling the photonic quantum emitter is returned to a state of superposition of the eigenstates as discussed before.

Preferably, the decoupling of the photonic quantum emitter from the remaining cluster state comprises the step c1 of Applying a quantum gate operation between the photonic quantum emitter and a new empty photonic mode to generate a new photon. Moreover, this preferably is followed by the step c2 of Measuring the newly generated photon in the computational basis.

It is an achievable advantage of this embodiment of the invention that the remaining cluster state is a purely photonic state. Such purely photonic states can be particularly useful in photonic quantum computing. Accordingly, in a preferred method according to the present invention, the quantum-mechanical cluster state is a purely photonic state, ie, it comprises of photons only.

The quantum gate operation involved in step c1 of the decoupling comprises the application of at least one quantum gate. It is an achievable advantage of this method of decoupling that it can be performed with only one quantum gate. Using a small number of quantum gates to decouple the photonic cluster state can result in a photonic cluster state of higher quality due to the fewer interactions with the cluster state, as opposed to the case where a greater number of quantum gates are used to decouple the system. The quantum gate operation used for decoupling preferably comprises, more preferably consist of applying a CX gate between the photonic quantum emitter and the new empty photonic mode to generate a new photon, as performed before in the step of generating the GHZ state or a section, followed by a measurement of the generated photon in the computational basis.

As used herein, the term **computational basis** refers to the basis used to perform quantum computation, i.e. the physical modes that are encoding the qubits 10> and |1>. In the case of the photonic state, the computational basis preferably refers to any two orthogonal polarization modes, more preferably it refers to the orthogonal polarizations in which the quantum emitter generates the photons. Therefore, measuring in the computational basis means measuring the photon in the polarization basis that encodes the states 10> and |1>.

The outcome of the measurement in step c2 can determine the state of the photonic quantum emitter, preferred whether it is in state $|\downarrow>$ or state $|\uparrow>$.

Preferably, after the step of measuring the newly generated photon, depending on whether the quantum emitter is in a particular state, a quantum gate operation is applied to any of the photons of the last-generated section. The quantum gate operation comprises the application of at least one quantum gate. Preferably, the quantum gate operation comprises, more preferably consist of applying a $Z$ gate to the photon. For example, if the measurement reveals that the photonic quantum emitter is in the $|\uparrow>$ state, a $Z$ gate is applied. It is an achievable advantage of this embodiment of the invention that a post-measurement state that contains unwanted sign flips can be converted to the desired sign.

Yet, in an alternative embodiment, such a transformation is taken care by modifying the subsequent operations that will be applied to the uncorrected state. For example, when generating a four-star GHZ state or GHZ-encoded qubit, upon decoupling one can obtain the unwanted state $(|R_4R_3R_2R_1> - |L_4L_3L_2L_1>)/\sqrt{2}$, instead of the desired state $(|R_4R_3R_2R_1> + |L_4L_3L_2L_1>)/\sqrt{2}$, where the second element has an unwanted negative sign. Such state can be corrected by applying a $Z$ gate on qubit 4 according to some embodiments of the invention. Alternatively, this gate can be included into the downstream operation performed on the state - eg if normally $X_4$ gate needs to be applied, a $iY_4$ gate is applied instead, since $Z_4X_4 = iY_4$.

Preferably, after the step of decoupling the photonic quantum emitter, one or more single-qubit gates are applied to the remaining cluster state. The single-qubit gates can be Clifford- and/or non-Clifford gates. It is an achievable advantage of this embodiment of the invention that entangled states of the section(s) described by a different state can be obtained. For example, starting from the four-photon GHZ state or GHZ-encoded qubit obtained in one of the aforementioned embodiments and described by the state $(|R_4R_3R_2R_1> + |L_4L_3L_2L_1>)/\sqrt{2}$, it is possible to generate the state $(|V_4R_3R_2V_1> + |H_4L_3L_2H_1>)/\sqrt{2}$ by applying the photonic Hadamard gate on photon 1 and 4 of the generated four-star GHZ state or GHZ-encoded qubit. These single-qubit gates can be achieved with a cascade of half- and quarter waveplates to correctly rotate the polarization of the photonic state.

The preferred photonic quantum emitter is a quantum dot. In the context of the present invention, the term **quantum dot** refers to a semiconductor structure that due to its small size can confine one or more electrons or holes, or both, in all three spatial dimensions such that they can assume discrete energy levels similar to those of atoms or molecules. A preferred quantum dot has a diameter of less than 200 nm, preferably less than 70 nm, more preferably less than 20 nm. In contrast, bulk semiconductors typically have broad continuous energy bands.

Alternative suitable photonic quantum emitters include other defect-based photonic quantum emitters such as those based on a defect in a crystal lattice, including colour centres, for example a nitrogen vacancy centre in a diamond, and hexagonal boron nitride emitters. Suitable quantum emitters also include atoms and molecules.

A preferred quantum-mechanical cluster state comprises a linear arrangement of $m$ photonic sections, wherein $m > 5$, wherein each section has $n_i > 1$ photons ($i$ = 1, 2, 3, ...) and wherein there is a first section p and a second section q that have that have the same number $n_p = n_q$ of photons and that are separated by at least four other sections between them. It is an advantage of this cluster state that by fusing sections p and q, the linear arrangement of sections between the first section p and the second section q can be formed into a ring. Such ring states can be of great use in quantum computing. Preferably, the cluster state moreover comprises a single photon located between one of the outer sections and its adjacent GHZ section. Preferably, after fusing the outer sections, the single photon is measured, more preferably in the X basis to correctly rotate the state and obtain a GHZ-encoded ring state.

The more sections there are between the first section p and the second section q, the larger the ring becomes. Preferably, there are at least 4, more preferably at least 5, even more preferably at least 6 sections, even more preferably at least 7 sections between the first section p and the second section q. In particular, with 7 sections it is achievable to create a 6-ring, which is particularly useful for quantum computing. Preferably, the first section p and/or the second section q is/are outer section(s) of the precursor states, ie, a section that has an adjacent section only on one side. Such ring lacking any appendices can be particularly useful in quantum computing applications. Preferably, at least one, more preferably all of the sections have more than one, more preferably more than 2 photons, even more preferably more than 3, even more preferably more than 4, even more preferably more than 5, even more preferably more than 6 photons forming a GHZ-encoded qubit.

In a preferred embodiment of the invention, a quantum-mechanical cluster state is generated by fusing two or more precursor cluster state in a way that a section of each cluster state is fused with a section of each other precursor cluster states. Particularly preferably, sections of the cluster states that that do not constitute outer sections of the cluster states are fused. This way, states can be produced that can be particularly useful in quantum computing applications.

Particularly preferably, the precursor cluster states have three sections and the middle sections are fused. Fusing the middle sections of two such states can generate a 4-star cluster state that can, ia, be useful in fusion based quantum computing. Preferably, at least one, more preferably all of the sections have more than one, more preferably more than 2 photons, even more preferably more than 3, even more preferably more than 4, even more preferably more than 5, even more preferably more than 6 photons forming a GHZ -encoded qubit.

Preferably, the sections to be fused have the same number of photons. The section that are fused in embodiments of the present invention preferably comprise more than 2 photons, even more preferably more than 3, even more preferably more than 4, even more preferably more than 5, even more preferably more than 6 photons forming a GHZ-encoded qubit. Advantageously, this can increase the chance of successfully fusing the two middle sections since, for the successful fusion of the middle sections, it is sufficient that one pair of photons, where each photon belongs to the middle section of a different cluster state, is successfully fused.

Accordingly, in a preferred method of fusing two or more sections, at least two photons of each section are fused with at least two photons of each other section. More preferably, at least three, even more preferably at least four, even more preferably at least five, even more preferably at least six, photons of each section are fused with the same number of photons of each other section. Most preferably, all photons of each section are fused with all photons of each other section. Preferably, fusion is performed pairwise, ie. for each photon pair that is being fused, each of the two photons belongs to a different section and the two photons to be fused cannot belong to the same section. Preferably, each photon takes part of at most a single fusion. These two properties define a **transversal fusion** between photons of two different sections, ie. a transversal fusion is a fusion measurement between two photons, where one photon belongs to one of the two sections being fused and the other photon belongs to the other section, and where each photon participates in a single fusion measurement.

In the following, we will refer to such transversal fusion of two sections containing at least two photons each as **generalized fusion measurement.** Accordingly, if, for example, there are two sections to be fused, the photons of these sections are fused pairwise, each pair comprising a different photon of each of the two sections. It is an achievable advantage of our invention that, when choosing the pairwise fusion measurement depending on the GHZ encoding of the two sections, the chance of a successful generalized fusion, ie. of successfully fusing two sections of $n$ photons is $1 - \frac{1}{2^n}$.

The fusion preferably is Type 2 fusion. Fusion preferably is performed by means of a fusion gate. **Fusion gate** is a structure that receives the at least two photons, each of which typically are but may not need to be part of a different quantum system, as input. In the case of two input photons, the fusion gate performs a projective measurement operation on the input photons.

*Brief description of the drawings*

In the following, further preferred embodiments of invention are illustrated by means of examples. The invention is not limited to these examples, however.

The drawings schematically show:

Figure 1     is an illustration of an exemplary GHZ-encoding scheme using a photonic linear cluster state. The state to be encoded is shown in (a), while the encoded state is shown in (b);

Figure 2     is an illustration of three exemplary photonic linear cluster states;

Figure 3     a quantum circuit description of the scheme that generates the photonic linear cluster state of Figure 1 (b);

Figure 4     a quantum circuit description of the scheme that generates a single 4-photon GHZ state;

Figure 5     a diagram of the generation of a GHZ-encoded four-star resource state from two precursor GHZ-encoded linear cluster states;

Figure 6     a diagram of the generation of a GHZ-encoded six-ring resource state from one precursor GHZ-encoded linear cluster state; and

Figure 7     a fusion gate suitable for implementing embodiments of aspects of the present invention.

## Detailed description of an embodiment of the invention

In the following description of preferred embodiments of the invention, identical reference numerals refer to identical or similar components.

*GHZ-encoded photonic linear cluster states*

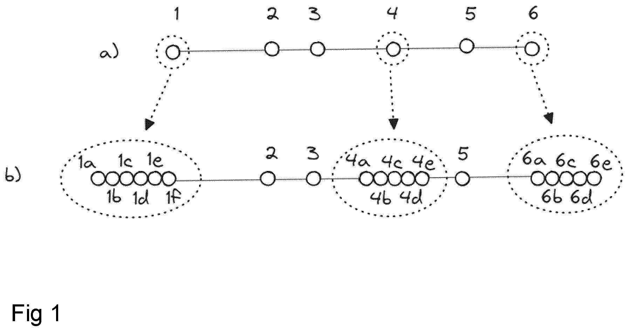

Aspects of this invention disclose a new general method to deterministically generate a class of encoded photonic states that we call GHZ-encoded photonic linear cluster states. The aim of the encoding is to protect a part or the totality of the qubits of a linear cluster state by encoding them with a GHZ-encoded qubit. An example is shown in Figure 1. The state to be encoded is a six-qubit linear cluster state as shown in Figure 1 (a). The encoded state is shown in Figure 1 (b): Qubits 1, 4 and 6 are encoded using a 6-photon and two 5-photon GHZ states, respectively. This, photons 1a to 1f encode qubit 1, photons 4a to 4d encode qubit 4 and photons 6a to 6d encode qubit 6. Qubits 2, 3 and 5 are encoded by single photons 2, 3 and 5.

In this context, "encoding" means that the sets of maximally entangled (ie, GHZ-like) photons at 1, 4 and 6 can be considered as individual qubits (a GHZ-encoded qubit) in further steps that employ the GHZ-encoded photonic linear cluster state. It is an advantage of such GHZ-encoded qubits that they have a greater resilience to photon losses than single-photon states; moreover, in fusion-based quantum computing they can be used to improve the success rate of fusion between two GHZ-encoded states as compared to the fusion of single-photon states.

A GHZ-encoded photonic linear cluster state, ie a photonic state composed of m different sections, each section having $n_i > 0$ photons ($i = 1, 2, ..., m$) can be obtained using a quantum dot by a protocol comprising the following steps:

1. Apply a Hadamard gate to the quantum dot in its ground state to initialise it in a balanced state of "down"- and "up"-spins $\frac{|\downarrow> + |\uparrow>}{\sqrt{2}}$ ;

2. For each section $i = 1, 2, ..., m$,

 a. Apply a sequence of $n_i$ CX gates between the quantum dot and $n_i$ empty photonic modes, the quantum dot serving as the control qubit and the photonic mode serving as the target qubit, to generate, if $n_i > 1$ the photonic GHZ-encoded qubit on $n_i$ photons, or, if $n_i = 1$ a single-photon encoded qubit;

 b. After the last photon of each section, apply a Hadamard gate to the quantum dot;

3. To decouple the quantum dot from the state,

 a. Apply a CX gate between the quantum dot and a new empty photonic mode to generate a new photon, the quantum dot serving as the control qubit and the photonic mode serving as the target qubit;
 b. Measure the newly generated photon in the computational basis; The outcome $m = 0, 1$ of the measurement determines the state of the quantum dot, ie, the quantum dot is in the "down" state $|\downarrow>$ if $m = 0$ and in the "up" state $|\uparrow>$ if $m = 1$.
 c. If m=1, apply a Z gate to any of the photons of the last generated section.

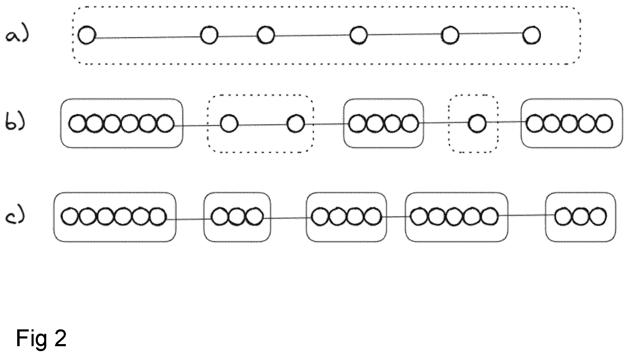

As shown exemplarily in Figure 2, this protocol can generate a wide variety of linear cluster states. The solid boxes in Figure 2 represent the GHZ-encoded part of the state, while the dashed boxes represent the linear cluster part of the state:

- If all GHZ-encoded sections consist of a single photon, a linear cluster state is generated. An example of such linear cluster state is shown in Figure 2 (a).

- If some sections contain more than one photon, states containing sections with linear cluster states, alternated with sections where GHZ-encoded qubits are present is generated. An example of such GHZ-encoded linear cluster state is shown in Figure 2 (b).

- If all sections contain more than one photon, it generates photonic states consisting of GHZ encoded qubits chained in a linear string. An example of such fully GHZ-encoded linear cluster state can be seen in Figure 2 (c).

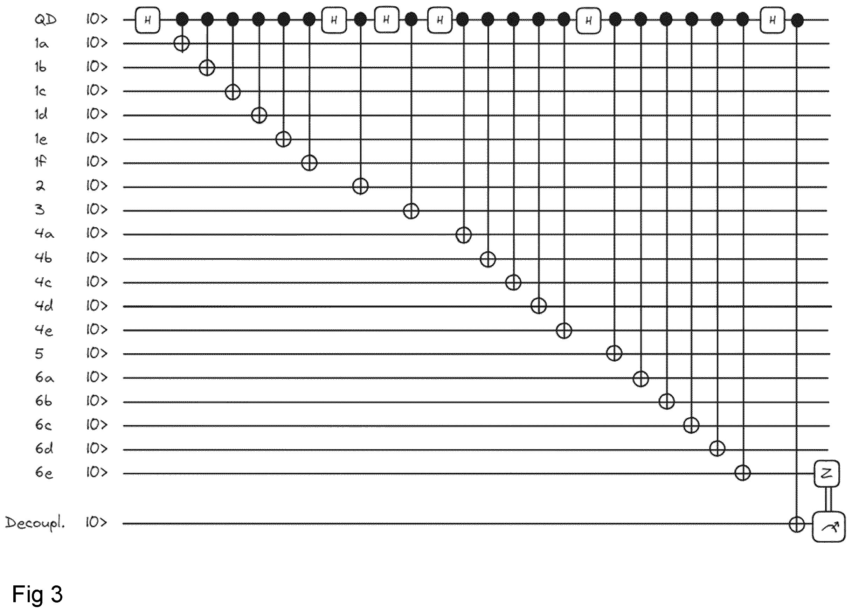

The quantum circuit shown in Figure 3 represents the scheme for the generation of the exemplary photonic linear cluster state shown in Figure 1 (b). "QD" refers to the quantum dot and 1a to 6e refers to the photons in Figure 1 (b). "H" refers to an H gate that rotates the state of the quantum dot to a balanced superposition of its eigenstates, and the vertical lines correspond to CX gates, the quantum dot serving as the control qubit and the photonic mode serving as the target qubit. "Decoupl." refers to the photon for decoupling, which is then measured followed by the application of a Z gate to the electron 6e of the outcome of the measurement indicates that the spin state of the quantum dot is "up".

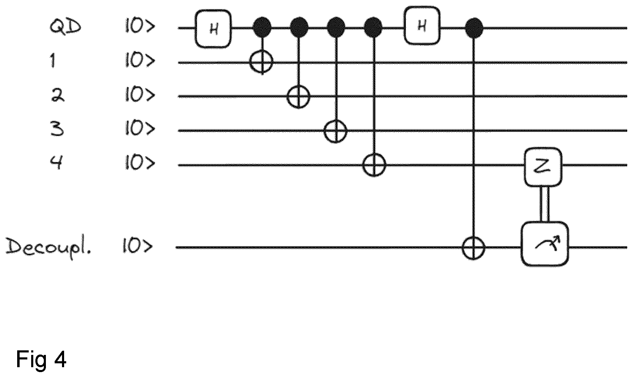

A second exemplary quantum circuit is shown in Figure 4. It generates a single 4-photon GHZ state.

*Detailed protocol for the generation of GHZ-encoded photonic linear cluster states.*

Aspects of this invention disclose a new general method to use a quantum dot to deterministically generate a class of encoded photonic states that we call GHZ-encoded photonic linear cluster states. This method is based on the repeated emission of photons, entangled to the same quantum dot, in order to create a large photonic entangled state. An embodiment of the method disclosed in our invention is based on the quantum dot system and operation described in Schwartz et al in "Deterministic generation of a cluster state of entangled photons," Science, 2016, 354, 434, the disclosure of which is incorporated into the present application by reference.

The physical structure of the quantum dot that emits photons is described in detail in Section 1 "Sample description" of the supplementary material of *Schwartz et al*. The considered system consists of a InGaAs quantum dot embedded within a GaAs microcavity on a GaAs substrate. The two mirrors of the microcavity are constituted by a stack of 11 and 25 pairs of AlAs/GaAs layers respectively, which create a distributed Bragg reflector that acts as a mirror at the frequency of the photon emitted by the quantum dot. The whole sample is placed in a closed-cycle helium fridge at a temperature of 4K.

The quantum dot system comprises three main energy levels, namely the ground state, the dark exciton state and the biexciton state, as shown in figure S2 of the supplementary materials of *Schwartz et al.* The dark exciton state and the biexciton state are excited state of the QD where one or two electrons are excited into the conduction band and are paired up with one or two holes, respectively.

In the dark exciton state, the excited electron is paired with a hole having the same spin, providing the dark exciton state with a long non-radiative lifetime. For this reason, this state is used as the lower energy level in the protocol for the generation of photons. Depending on whether the hole of the dark exciton is in a ground or excited energy level, the dark exciton is found in two slightly different states, the *DE* or the *DE\** states respectively. The DE\* state has a slightly higher energy than the DE state and rapidly decays to the DE state with the emission of a spin-preserving phonon.

Both the DE and the DE\* states are superposition of the spin eigenstates of the QD (with slightly different energies) having +2 or -2 total spin respectively, represented by the symbols $|\uparrow\rangle$ and $|\downarrow\rangle$, e.g. the DE state corresponds to the superposition of states

$$\frac{|+2\rangle + |-2\rangle}{\sqrt{2}}$$ , which is also indicated as

$$\frac{|\uparrow\rangle + |\downarrow\rangle}{\sqrt{2}}$$ . Since the DE state is not an eigenstate of the QD, it will precede overtime, with precession time equal to 3ns.

To prepare the quantum dot in the *DE* state, the system is excited from the ground to the *DE\** state using a laser radiation at a wavelength of 954nm, and then the system rapidly decays to the *DE* state. Due to the rapid decay and the preservation of spin during the DE\*-DE transition, the presence of the DE\* state can be effectively neglected when discussing the properties of the generated photonic state (e.g. when representing the photon generation via a circuital representation).

The biexciton state *BiE* is a second excited state of the QD, in which two electrons are excited and coupled to two holes. The *BiE* state is short-lived, with an average lifetime of ~0.33ns, and decays to the DE\* state by emitting a photon at a wavelength of 970nm. Excitation of the DE state to the BiE state is accomplished using a laser radiation at 959nm.

The BiE state is a balanced superposition of the eigenstates of the QD having +3 or -3 total spin, represented by the symbols $|\Uparrow\rangle$ and $|\Downarrow\rangle$ respectively, e.g. it corresponds to the state $$\frac{|+3\rangle + |-3\rangle}{\sqrt{2}}$$ , which is

also indicated as $$\frac{|\Uparrow\rangle + |\Downarrow\rangle}{\sqrt{2}}$$ . Since the BiE state is not an eigenstate of the QD, it will precede over time, with precession time equal to 5ns.

The properties of the emitted photon when the BiE decays to the DE state depend on the state of the biexciton when the emission occurs, since the eigenstates $|\uparrow\rangle$ and $|\Uparrow\rangle$ couple via circularly right polarized light, and the eigenstates $|\downarrow\rangle$ and $|\Downarrow\rangle$ couple via circularly left polarized light. Therefore, if the BiE emits the photon when it is in a balanced superposition such as

$$\frac{|\Uparrow\rangle + |\Downarrow\rangle}{\sqrt{2}}$$ , then the final system of the quantum dot and the emitted photon is found in an entangled state

$$\frac{|\uparrow, R\rangle + |\downarrow, L\rangle}{\sqrt{2}}$$ , as desired.

The generation of a GHZ-encoded cluster state comprising m sections containing $n_i$ photons (for $i$ = 0, 1, ..., $m$) is accomplished via the following steps.

1. The QD is initialized in the DE\* state using a laser pulse at 954 nm, followed by a decay to the long-lived DE state. The pulse duration depends on its intensity, and both are chosen to completely excite the QD to the DE\* state. Contrary to what is shown in the quantum circuit descriptions in the Figures, this particular step of initialising the photonic quantum emitter in fact implements a √X-gate rather than an H gate.

2. In order to generate a single section comprising $n_i$ photons, the QD in the DE state is excited by a train of $n_i$ a horizontally polarized pulses of light at 970 nm. The pulse duration depends on its intensity, and both are chosen to completely excite the QD to the BiE state. In an embodiment of our invention, each excitation pulse has a duration of 12 ps. The pulses are separated by a fixed time delay, equal to the average emission time (0.33 ns) plus integer multiples of the precession time of the dark exciton (3ns). In an embodiment of our invention, the time delay corresponds to corresponding to the average emission time of the QD, namely 0.33 ns. In the quantum circuit descriptions in the Figures, the sequence of laser pulses used to excite the QD and the related emission of a single photon are represented by the sequence of CX gates.

3. After the last $n_f$-th pulse has been injected, the system is left free to evolve for a time delay equivalent to an odd multiple of the precession time of the DE state. In an embodiment of our invention, the QD is left free to evolve for a time delay of 2.25 ns.

4. Step 2 and Step 3 are required to complete the generation of a single section comprising $n_i$ photons. Therefore, steps 2 and 3 are repeated m times to create the m sections of the GHZ-encoded linear cluster state.

5. In order to decouple the photonic state from the quantum dot, a final photon is emitted by performing steps 2 and 3 and using a single light pulse to excite the DE state to the BiE state. The polarization of the emitted photon is then measured in the circular left/-right basis.

6. If the measured photon is found in the circularly left polarization, then a $\pi$ phase shift should be applied to correct the phase of the polarization of the last generated photon. This can be applied using a half waveplate aligned at 45° with respect to the horizontal and vertical polarization axes. However, since this correction can be applied *a posteriori* by adapting the circuit where the generated state is used, we can neglect this step here and assume it as being corrected in the subsequent quantum circuit that uses the generated state.

7. Finally, the quantum dot must be reset to its vacuum state before starting with the emission of a new photonic state. This is achieved by illuminating the quantum dot with laser light at 941nm, corresponding to the transition between the DE state and the ground state, for a sufficient amount of time, depending on the intensity of the laser light. In an embodiment of our method, the laser light is shone on the quantum dot for a duration larger than 6 ns.

*GHZ-encoded photonic 4-star state generated by fusion.*

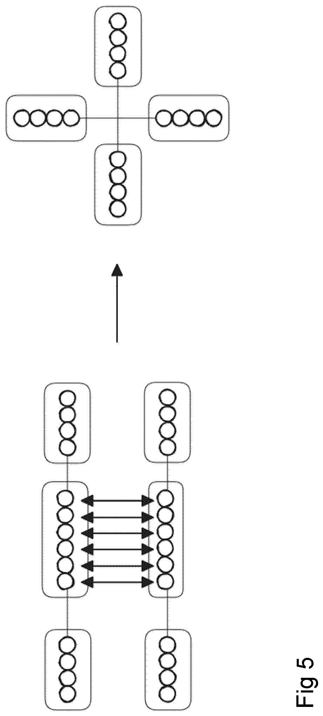

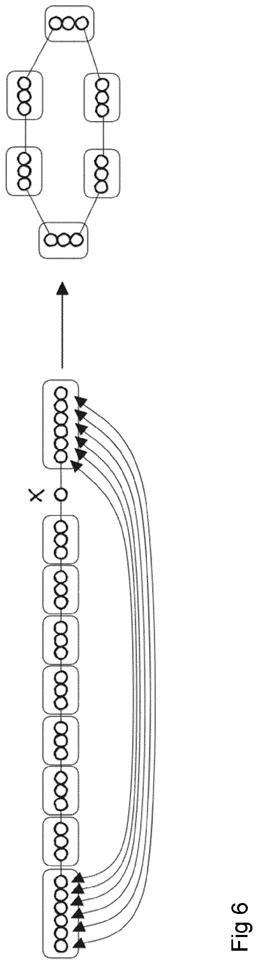

A GHZ-encoded four-star state can be generated using two precursors, as shown in Figure 5. On the left, the two precursor states, whose central photons are fused transversally via a generalized fusion measurement, are shown. On the right, the final encoded four-star state is shown. These precursors consist of three different GHZ sections. The two middle sections of the precursors have the same number of photons. These photons are fused together pairwise as indicated by the double-headed arrows in Figure 5: each photon of the middle section of one precursor cluster state is fused with another photon of the middle section of the other precursor cluster state. Note that the order of the photon pair does not matter, both here and in forming the ring state discussed further below. In Figs 5 and 6, the double-headed arrows are "parallel", so the first/second/third/... photon of a section fuses with the first/second/third/... photon of the other section. However, this is not necessary and it is just one specific configuration: any arrangement that pairs one photon of the first section with any photon of the second section works, i.e. the double-headed arrows do not need to be parallel but can intersect in any way.

In this example, the outer sections of the precursor states have identical number of photons, which results in a four-star state in which the state of each of the four leaves is encoded by the same number of photons. Note, however, that it is by no means necessary that each outer section have the same number of photons. If this number varies, this merely result in a 4-star state where the leaves are encoded by a different number of photons. However, since the four-star network as for example described in Bartolucci et al, "Fusion-based quantum computation", Nat Commun, 2023, 14, 912 requires symmetric four-star resource states, a GHZ-encoded four-star state with an identical number of photons encoding its leaves is particularly useful for such networks.

A GHZ-encoded four-star resource state can be obtained by a protocol comprising the following steps:

1. Generate, by using the protocol further above, two GHZ-encoded photonic linear precursors cluster state comprising $m = 3$ sections, where each section has two or more photons;

2. Fuse the two middle sections of the two precursor states using a generalized fusion measurement by applying a fusion gate, projecting on either the state $\frac{|++\rangle + |--\rangle}{\sqrt{2}}$ or the state $\frac{|++\rangle - |--\rangle}{\sqrt{2}}$, to each pair of photons, with one photon coming from the internal section of either precursor state. This generalized fusion gate succeeds if at least one fusion succeeds; and

3. If all fusions in the generalized fusion measurement fail, restart this protocol with step 1.

Once the protocol has succeeded, the resulting state is a GHZ-encoded four-star state.

*Detailed description of the generation of a GHZ-encoded photonic 4-star state via generalized fusion measurement.*

An embodiment of claim 24 consists of a method to fuse two GHZ-encoded linear cluster state to achieve a 4-star GHZ-encoded state. Such method is shown schematically in Fig. 5 and is explained in detail in the following.

Let us consider two GHZ-encoded linear cluster states generated with the procedure outlined in the previous section. Each of these states comprises three sections of $n, m$, and $n$ photons, respectively.

In order to generate a photonic 4-star GHZ-encoded state, we will fuse the central sections of the two states together via a generalized fusion measurement, consisting of transversal fusions between the $m$ photons constituting each of the two central sections.

The **generalized fusion measurement** consists of performing a two-photon measurement between each pair $(a_1, b_1), (a_2, b_2), ..., (a_m, b_m)$ of the photons of the two central sections, where $a_1, a_2, ..., a_m$ are the $m$ photons of the central section of the first state and $b_1, b_2, ..., b_m$ are the m photons of the central section of the second state. The ideal two-photon measurement to be performed projects the photon pair $(a_i, b_i)$ onto the Bell state $\dfrac{|++\rangle \pm |--\rangle}{\sqrt{2}}$, in the computational basis, explained in the following paragraph. Since all the two-photon measurements are identical and do not depend on which photon pair is being measured, we will describe here only the equipment necessary to perform a single fusion measurement between two photons $(a_1, b_1)$.

The fusion gate discussed in the following is based on the ones presented in Browne and Rudolph, "Resource-Efficient Linear Optical Quantum Computation", PRL 95, 010501 (2005), Figure 2b).

The photonic state generated with the procedure outlined in the previous section is polarization-encoded, whereby a circularly right-polarized (left-polarized) photon encodes a $|0\rangle$ ($|1\rangle$) qubit. Therefore, the original computational basis has encoding $|R\rangle = 10$) and $|L\rangle = |1\rangle$. In an embodiment of our invention, we route all the generated photons through a quarter waveplate at 45° and a half waveplates at 22.5° with respect to the vertical polarization axis, in order to convert the circular polarization in the linear polarization, i.e. $|R\rangle \rightarrow |H\rangle$ and $|L\rangle \rightarrow |V\rangle$. In the rest of this section, we consider having converted the polarization of the photonic state according to the aforementioned transformations, i.e. the computational basis has encoding $|H\rangle = |0\rangle$ and $|V\rangle = |1\rangle$. The main implication is that the fusion gates presented below are considered as operating over photons encoded in the $|H\rangle$ and $|V\rangle$ basis. In another embodiment of our invention, the photons are not passed through the quarter and half waveplate. In this second embodiment, to ensure the same final operation, the fusion gates need to include the sequence of quarter and half waveplate at their input ports, in order to provide the same effective transformation.

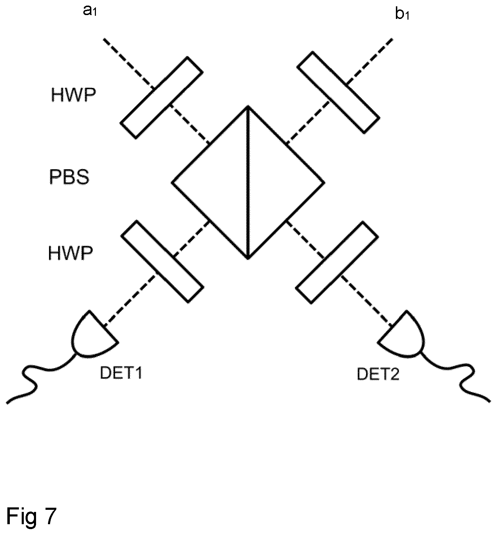

Considering the encoding $|H\rangle = |0\rangle$ and $|V\rangle = |1\rangle$, the fusion measurements required to generate the 4-star GHZ state require projecting the photons $(a_1, b_1)$ onto the Bell states $\dfrac{|++\rangle + |--\rangle}{\sqrt{2}}$ or $\dfrac{|++\rangle - |--\rangle}{\sqrt{2}}$. This can be performed *probabilistically* using the fusion gate shown in Figure 7.

The photons $a_1$ and $b_1$, belonging to the two different states, are each sent upon a half waveplate, which rotates the polarization from horizontal/vertical to diagonal/antidiagonal. The rotated photons are then sent onto a polarizing beamsplitter PBS, which transmits horizontally polarized light $|H\rangle$ and reflects vertically polarized light $|V\rangle$. Finally, light exiting the polarizing beamsplitter PBS from the two output ports is passed again through two half waveplates HWP, which rotate the polarization from horizontal/vertical to diagonal/antidiagonal. The photons are detected after the half waveplates HWP via two photon number resolving detectors which are polarization sensitive, ie they can measure the number of photons horizontally and vertically polarized that impinge on them.

In the absence of losses and in the presence of ideal components, there are four equiprobable detection outcomes possible:

- One photon is detected at each detector, and the polarization of the two photons is the same: in this case, the fusion was successful.

- One photon is detected at each detector, and the polarization of the two photons is different: in this case, the fusion was successful, up to a known phase shift. This known phase shift can be corrected using half waveplates on the remaining photons of the fused state or can be tracked and the successive operations can keep track of this known phase shift.

- Two photons are detected in a first detector DET1: in this case the fusion failed.

- Two photons are detected in a second detector DET2: in this case the fusion failed.

The generalized fusion measurement is performed by applying the aforementioned fusion gate to all photon pairs $(a_1, b_1), (a_2, b_2), ..., (a_m, b_m)$ of the photons of the two central sections of the two photonic states. In an embodiment of our invention, the fusion gate comprising of two half waveplates HWP, a polarizing beamsplitter PBS and another two half waveplates HWP is only one and the different fusion pairs enter it one after the other, at different times. In another embodiment of our invention, *m* physically different but identical fusion gates are provided and each photon pair enters only a single fusion gate (either at the same time, or at different times).

With this scheme, it is sufficient that only one of the *m* pairs undergoes a successful fusion, in order to achieve a successful generalized fusion and thus fuse the two GHZ-encoded states.

*GHZ-encoded six-ring state generated by fusion*

A GHZ-encoded six-ring state can be generated using a single precursor state, as shown in Figure 6. On the left, the precursor linear cluster state, whose outer photons are fused transversally is shown. The photon indicated with the "X" is a single photon that needs to be measured in the X basis as discussed further below. On the right, the final encoded ring state, a six-ring state in this particular case, is shown.

This precursor consists of two outer GHZ sections, six inner GHZ sections and a single photon located between one of the outer GHZ sections and the adjacent GHZ section.

The two outer GHZ sections contain the same number of photons. These photons are fused together pairwise, as is indicated by the double arrows in Figure 6: Each photon of the one outer section is fused with another photon of the other outer section of the precursor cluster state.

In this example, the inner sections of the precursor states have identical number of photons, which results in a ring state in which the state of each section of the ring is encoded by the same number of photons. Note, however, that it is by no means necessary that each inner section have the same number of photons. If this number varies, this merely result in a ring state where the sections are encoded by varying numbers of photons. However, since the six-ring network as for example described in Bartolucci et al, "Fusion-based quantum computation", Nat Commun, 2023, 14, 912 requires symmetric six-ring resource states, a GHZ-encoded ring state with an identical number of photons encoding its sections is particularly useful for such networks.

A GHZ-encoded ring state can be obtained by a protocol comprising the following steps:

1. Generate, by using the protocol further above, a GHZ-encoded photonic linear precursors cluster state comprising

   a. two outer sections with the same number of photons,
   b. at least three inner sections to constitute the ring state, each section being a GHZ state of two or more photons, and
   c. a single photon and a single photon located between one of the outer GHZ sections and the adjacent GHZ section;

2. Fuse the two outer sections using a generalized fusion measurement, ie, applying a fusion gate to each pair of photons, with one photon coming from each outer section. This generalized fusion measurement succeeds if at least one fusion succeeds;

3. If the fusion of the outer sections fails, restart the protocol with step 1; and

4. If the fusion of the outer sections succeeds, measure the single photon in the X basis to correctly rotate the state and obtain a GHZ-encoded ring state.

*Detailed description of the generation* of a *GHZ-encoded photonic ring state via generalized fusion measurement.*

An embodiment of claim 23 consists of a method to fuse the two ends of a GHZ-encoded linear cluster state to achieve a GHZ-encoded ring cluster state. Such method is shown schematically in Fig. 6 and is explained in detail in the following.

Consider a GHZ-encoded linear cluster state comprising of a first section having m photons, a number of sections containing one or more photons, a penultimate section having a single photon and a last section having m photons, as shown in the left part of Fig. 6. To fuse the two ends of the GHZ-encoded linear cluster state, we perform two operations:

1. First, we perform a generalized fusion measurement to fuse the two outer sections of the state. This generalized fusion measurement consisting of transversal fusions between the m photons constituting each of the two outer sections. In the computational basis, explained in the following paragraph, each of the m fusion measurements comprising the generalized fusion measurement projects the input photon pair onto the Bell state $\frac{|++\rangle \pm |--\rangle}{\sqrt{2}}$.

2. After a *successful* generalized fusion measurement, the single photon in the penultimate section is measured. In the computational basis, this single photon measurement corresponds to projecting the photon in the penultimate section onto the state $|+\rangle$ or $|-\rangle$.

If the generalized fusion measurement fails, a new GHZ-encoded linear cluster state must be generated and the generalized fusion measurement must be attempted again.

*Step 1 - The generalized fusion measurement*

The **generalized fusion measurement** consists of performing a two-photon measurement between each pair $(a_1, b_1), (a_2, b_2), ... , (a_m, b_m)$ of the photons of the two outer sections, where $a_1, a_2, ..., a_m$ are the m photons of the outer section at one end of the state and $b_1, b_2, ..., b_m$ are the m photons of the outer section at the opposite end of the state. The ideal two-photon measurement to be performed projects the photon pair $(a_i, b_i)$ onto

$$\frac{|++\rangle \pm |--\rangle}{\sqrt{2}}$$

the Bell state , in the computational basis. Since the two-photon measurements are identical and do not depend on which photon pair is being measured, we will describe here only the equipment necessary to perform a single fusion measurement between two photons $(a_1, b_1)$.

The fusion gate discussed in the following is based on the ones presented in Browne and Rudolph, "Resource-Efficient Linear Optical Quantum Computation", PRL 95, 010501 (2005), Figure 2b).

The photonic state generated with the procedure outlined in the previous section is polarization-encoded, whereby a circularly right-polarized (left-polarized) photon encodes a 10) ($|1\rangle$) qubit. Therefore, the original computational basis has encoding $|R\rangle = |0\rangle$ and $|L\rangle = |1\rangle$. In an embodiment of our invention, we route all the generated photons through a quarter waveplate at 45° and a half waveplates at 22.5° with respect to the vertical polarization axis, in order to convert the circular polarization in the linear polarization, i.e. $|R\rangle \rightarrow |H\rangle$ and $|L\rangle \rightarrow |V\rangle$. In the rest of this section, we consider having converted the polarization of the photonic state according to the aforementioned transformations, i.e. the computational basis has encoding $|H\rangle = |0\rangle$ and $|V\rangle = |1\rangle$. The main implication is that the fusion gates presented below are considered as operating over photons encoded in the $|H\rangle$ and $|V\rangle$ basis. In another embodiment of our invention, the photons are not passed through the quarter and half waveplate. To ensure the same final operation, the fusion gates need to include the sequence of quarter and half waveplate at their input ports, in order to provide the same effective transformation.

Considering the encoding $|H\rangle = |0\rangle$ and $|V\rangle = |1\rangle$, the fusion measurements required to generate the GHZ-encoded ring state require projecting the photons $(a_1, b_1)$

$$\frac{|++\rangle + |--\rangle}{\sqrt{2}} \quad \frac{|++\rangle - |--\rangle}{\sqrt{2}}$$

onto the Bell states or .

This can be performed probabilistically using the fusion gate shown in Figure 7.

The photons $a_1$ and $b_1$, belonging to the two different states, are each sent upon a half waveplate, which rotates the polarization from horizontal/vertical to diagonal/antidiagonal. The rotated photons are then sent onto a polarizing beamsplitter (PBS), which transmits horizontally polarized light $|H\rangle$ and reflects vertically polarized light $|V\rangle$. Finally, light exiting the PBS from the two output ports is passed again through two half waveplates (HWP), which rotate the polarization from horizontal/vertical to diagonal/antidiagonal. The photons are detected after the HWPs via two photon number resolving detectors which are polarization sensitive, i.e. they can measure the number of photons horizontally and vertically polarized that impinge on them.

In the absence of losses and in the presence of ideal components, there are four equiprobable detection outcomes possible:

- One photon is detected at each detector, and the polarization of the two photons is the same: in this case, the fusion was successful.

- One photon is detected at each detector, and the polarization of the two photons is different: in this case, the fusion was successful, up to a known phase shift. This known phase shift can be corrected using half waveplates on the remaining photons of the fused state or can be tracked and the successive operations can keep track of this known phase shift.

- Two photons are detected in DET1: in this case the fusion failed.

- Two photons are detected in DET2: in this case the fusion failed.

The generalized fusion measurement is performed by applying the aforementioned fusion gate to all photon pairs $(a_1, b_1), (a_2, b_2), ..., (a_m, b_m)$ of the photons of the two outer sections of the GHZ-encoded photonic linear cluster state. In an embodiment of our invention, the fusion gate comprising of two half waveplates HWP, a polarizing beamsplitter PBS and another two half waveplates HWP is only one and the different fusion pairs enter it one after the other. In another embodiment of our invention, $m$ physically different but identical fusion gates are provided and each photon pair enters only a single fusion gate (either at the same time, or in different times).

With this scheme, it is sufficient that only one of the m pairs undergoes a successful fusion, in order to achieve a successful generalized fusion and thus fuse the two GHZ-encoded states.

*Step 2 - The single photon projective measurement.*

After a *successful* generalized fusion measurement, the photon in the penultimate section of the original photonic state is measured and projected onto the states |+) or |-). Again, we consider here the computational basis $|H\rangle = |0\rangle$ and $|V\rangle = |1\rangle$, meaning that projecting the single

photon onto $|+\rangle$ or $|-\rangle$ is equivalent to measuring the photon in the diagonal/antidiagonal basis. This can be done by passing the photon through a half waveplate at a 45° angle and using a polarization sensitive single photon detector that distinguishes between $|H\rangle$ and $|V\rangle$ photons.

The features as described in the above description, claims and figures can be relevant individually or in any combination to realise the various embodiments of the invention.

**Claims**

1. A method of generating, by using a photonic quantum emitter, a quantum-mechanical GHZ state, the method comprising the steps of:

   - Generating a GHZ state comprising the photonic quantum emitter and at least three photons; and
   - Decoupling the photonic quantum emitter from the remaining cluster state, the decoupling of the photonic quantum emitter from the remaining cluster state comprising the steps of:

      c1. Applying a quantum gate operation between the photonic quantum emitter and a new empty photonic mode to generate a new photon; and
      c2. Measuring the newly generated photon in the computational basis.

2. A method of generating, by using a photonic quantum emitter, a quantum-mechanical cluster state that comprises a linear arrangement of $m$ photonic sections, wherein $m > 1$, wherein each section has $n_i > 0$ photons ($i = 1, 2, ... , m$) and at least one section comprises more than one photon, the method comprising the steps of:

   - Generating a cluster state comprising the photonic quantum emitter and a linear arrangement of $m$ photonic sections; and
   - Decoupling the photonic quantum emitter from the remaining cluster state.

3. The method of claim 2, **characterised in that** at least one of $m$ photonic sections comprises two or more photons, the two or more photons forming a GHZ-encoded qubit.

4. A method of generating, using a photonic quantum emitter, a quantum-mechanical cluster state that comprises a linear arrangement of $m$ photonic sections, wherein $m > 1$, wherein each section has $n_i > 0$ photons ($i = 1, 2, ... , m$) and at least one section comprises more than one photon, the method comprising the steps of:

   a. If the photonic quantum emitter is not already in a state of superposition of eigenstates that can emit a photon in a superposition of two photonic modes, initialising the photonic quantum emitter in such a state of superposition; and
   b. Generating $m$ sections by performing for each section $i = 1, 2, ... , m$ sequentially, starting with $i = 1$, at least the steps of:

      b1. Generating a section $i$ comprising $n_i$ mutually entangled photons by means of generating a sequence of $n_i$ photons whose state is entangled with the state of the photonic quantum emitter; and
      b2. Returning the photonic quantum emitter to a state of superposition of the eigenstates.

   c. Decoupling the photonic quantum emitter from the remaining cluster state.

5. The method of claim 4, **characterised in that** the step of returning the photonic quantum emitter to a state of superposition of the eigenstates comprises the application of a quantum gate operation to the photonic quantum emitter.

6. The method of claim 4 or 5, **characterised in that** the step of initialising the photonic quantum emitter in a state of superposition of eigenstates comprises the application of a quantum gate operation to the photonic quantum emitter.

7. The method of any one of claims 4 to 6, **characterised in that** the eigenstates of the photonic quantum emitter are spin eigenstates of the photonic quantum emitter.

8. The method of any one of claims 4 to 7, **characterised in that** the photonic modes of the emitted photons are orthogonal polarisation modes.

9. The method of any one of claims 4 to 8, **characterised in that** the step of generating a section comprising $n_i$ mutually entangled photons comprises applying a sequence of $n_i$ quantum gates operations between the photonic quantum emitter and $n_i$ empty photonic modes.

10. The method of any one of the preceding claims, **characterised in that** one or more sections $i$ have $n_i \geq 4$ photons.

11. The method of any one of the preceding claims, **characterised in that** each section $i$ has $n_i \geq 2$ photons.

12. The method of claim 2 or 3, **characterised in that** the decoupling of the photonic quantum emitter from the remaining cluster state comprises the steps of:

c1. Applying a quantum gate operation between the photonic quantum emitter and a new empty photonic mode to generate a new photon; and
c2. Measuring the newly generated photon in the computational basis.

13. The method of claim 12, **characterised in that** after the step of measuring the newly generated photon, depending on whether the quantum emitter is in a particular state, a quantum gate operation is applied to any of the photons of the last-generated section.

14. The method of any one of claim 1,2, 11, 12 and 13, **characterised in that** after the step of decoupling the photonic quantum emitter, one or more single-qubit gates are applied to the remaining photonic cluster state.

15. The method of any one of the preceding claims, **characterised in that** the photonic quantum emitter is a quantum dot.

16. A quantum-mechanical cluster state obtained the method of any one of the preceding claims.

17. A quantum-mechanical cluster state that comprises a linear arrangement of m photonic sections, wherein $m > 1$, each section has $n_i > 0$ photons ($i = 1, 2, ... , m$) and at least one section comprises two or more photons, the two or more photons forming a GHZ-encoded qubit.

18. The quantum-mechanical cluster state according to claim 17, **characterised in that** it is a purely photonic state.

19. The quantum-mechanical cluster state according to claim 17 or 18, **characterised in that** the state comprises a linear arrangement of m photonic sections, wherein $m > 5$, wherein each section has $n_i > 1$ photons ($i = 1, 2, 3, ...$) and wherein there is a first section p and a second section q that have that have the same number $n_p = n_q$ of photons and that are separated by at least four other sections between them.

20. A set of two or more quantum-mechanical cluster states each according to claim 17.

21. A method that uses the quantum-mechanical cluster state of any one of claims 16 to 20.

22. A method in which the GHZ state or at least one sections of the cluster state that constitutes a GHZ state according to the method of any one of claims 1 to 15, or the quantum-mechanical cluster state of any one of claims 16 to 20 is used to represent a qubit.

23. A method of creating a quantum-mechanical ring cluster state, the method comprising the steps of

a. Providing a quantum-mechanical precursor cluster states according to claim 19; and
b. Fusing the first section p of the quantum-mechanical precursor state with its second section q.

24. A method of generating quantum-mechanical cluster states, the method comprising the steps of

a. Providing a set of two or more precursor cluster states, which set includes amongst its precursor cluster states at least one of the following three options or a combination thereof:

- One or more cluster states according to any one of the claims 17 to 19,
- One or more cluster state generated according to any one of the methods of claims 1 to 15, or
- The set of two or more cluster states of claim 20; and

b. Fusing a section of each cluster state of the set with a section of each other precursor cluster states of the set.

25. A method of fusion based quantum computing that employs resource states which include at least

- one or more cluster states according to any one of claims 17 to 19;
- One or more cluster states generated by the method according to any one of claims 1 to 15 and 21 to 24; or
- The set of two or more cluster states of claim 20.

26. An apparatus that implements the method of any one of claims 1 to 15 and 21 to 25.

Fig 1

Fig 2

Fig 3

Fig 4

Fig 5

Fig 6

$a_1$    $b_1$

HWP

PBS

HWP

DET1    DET2

Fig 7

## EUROPEAN SEARCH REPORT

Application Number

EP 24 19 2089

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/419149 A1 (SEMO GIL [IL] ET AL) 28 December 2023 (2023-12-28) | 1,3, 14-16, 21,22,26 | INV. G06N10/20 G06N10/40 |
| A | * paragraph [0119] * <br> * paragraph [0138] - paragraph [0139] * <br> * paragraph [0171] - paragraph [0181] * <br> * paragraph [0242] - paragraph [0243] * <br> * figures 1-6 * <br> ----- | 2,4-13, 17-20, 23-25 | |

TECHNICAL FIELDS SEARCHED (IPC)

G06N

The present search report has been drawn up for all claims

| Place of search | Date of completion of the search | Examiner |
|---|---|---|
| The Hague | 14 March 2025 | Baldan, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 24 19 2089

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2025

| Patent document cited in search report | Publication date | Patent family member(s) | | Publication date |
|---|---|---|---|---|
| US 2023419149 A1 | 28-12-2023 | EP | 4330866 A2 | 06-03-2024 |
| | | JP | 2024517722 A | 23-04-2024 |
| | | KR | 20240004640 A | 11-01-2024 |
| | | US | 2023419149 A1 | 28-12-2023 |
| | | US | 2024256934 A1 | 01-08-2024 |
| | | US | 2024338585 A1 | 10-10-2024 |
| | | US | 2024338586 A1 | 10-10-2024 |
| | | US | 2024346354 A1 | 17-10-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LINDNER et al.** Proposal for pulsed on-demand sources of photonic cluster state strings. *Phys Rev Lett*, 2009, vol. 103, 113602
- **SCHWARTZ et al.** Deterministic generation of a cluster state of entangled photons. *Science*, 2016, vol. 354, 434
- **LÖBL et al.** Loss-tolerant architecture for quantum computing with quantum emitters. *arXiv:2304.03796v2*, 2023
- **LI et al.** in "Photonic resource state generation from a minimal number of quantum emitters. *npj Quantum Inf*, 2022, vol. 8, 11

- **HEIN et al.** Entanglement in Graph States and its Applications. *arXiv:quant-ph/0602096*, 2006, 14
- **BARTOLUCCI et al.** Fusion-based quantum computation. *Nat Commun*, 2023, vol. 14, 912
- **BROWNE** ; **RUDOLPH**. Resource-Efficient Linear Optical Quantum Computation. *PRL*, 2005, vol. 95, 010501